# EUROPEAN PATENT APPLICATION

(11) **EP 1 220 006 A2**
(43) Date of publication of application: **03.07.2002**
(21) Application number: 01310461.7
(22) Date of filing: 14.12.2001
(51) Int. Cl.: G02B 21/36

(54) **Microscope with wireless television camera**

(30) Priority: 27.12.2000 JP 2000396514
(71) Applicant: Lunax Company Limited, Makabe-gun, Ibaraki-ken (JP)
(72) Inventor: Omi, Eiichi, Tokyo (JP)
(74) Representative: Rackham, Stephen Neil

(57) **Abstract**

A television camera apparatus having a microscopic unit (10) and observing unit or a monitor unit (100) are not connected to each other by cable, and this eliminates restrictions of a relative position of the microscopic unit (10) to the monitor unit (100), so as to facilitate indoor observation of samples such as snow as they would be in their respective natural environments. The present invention is also directed to providing a television camera apparatus (40) of a simple configuration which allows an observer to see samples from desired positions without rotating the sample-mounting plate (42). The television camera apparatus is provided with a base (12), a supporting arm (22) pivotally fixed about a rotation axis orthogonal to the base, a sample-mounting plate (42), microscopic object optics (30), and illuminating optics (32) attached respectively to the supporting arm (22), and a wireless television camera unit (40) located in an imaging position in the microscopic object optics.

## Description

The present invention relates to a television camera apparatus such as a television microscope and a television microscopic system, and more particularly, it relates to a television camera apparatus, such as a television microscope and a television microscope system, which can allow an observer to remotely monitor non-invertible samples including objects floating in liquid from any desired position such as the one under the objects, and/or which has a camera unit and a display unit positioned far away from each other in wireless communication with each other so as to eliminate annoying manipulation of those units.

In general, prior art ordinary microscopes have oculars, and this causes freedom of monitoring posture to be limited, which also causes observable phases of monitored samples to be highly restricted.

To overcome such a disadvantage, there have been commercially available cable television microscopes in which a reflective illuminating optics, an objective optics, and a cable television camera have all been integrated into a single unit and detachably mounted onto a base.

Such prior art cable television microscopes have been inconvenient in that a microscopic unit and an observing unit or a monitor unit are connected with each other by cable, and this restricts relative positions of the microscopic unit to the monitor unit. For observation of snow that must be conducted in the open air to monitor snow as it naturally falls, it sometimes might be preferable to conduct indoor observation if time-consuming task is expected, but various factors prohibit the indoor observation from being performed.

Another disadvantage of the prior art is that it is difficult to observe samples from desired positions when the samples assume orientations varied from one side to another as in a minute identification mark labeled for discriminating authenticated paper currencies and securities from counterfeit ones because of its inconspicuous and incomprehensible geometrical profile when seen from only a single fixed position. An optical system such as a polarizing microscope has its sample-mounting plate configured to be pivotal about an optical axis although such pivotal movement is restricted precisely to rotations in a single plane, and the configuration required to be of high precisions causes the system to be expensive and to fail to have portability for observation anywhere convenient and desired.

Further disadvantage of the above-mentioned cable television microscope is that it is fixedly supported by a supporting base and assumes a fixed posture oriented downward to observe the sample-mounting plate down under. However, it is essential observing samples such as aquatic animals as they would be in their respective natural aquatic environments, and it is also sometimes desirable observing phases of the samples seen from varied positions, especially observing their bottoms. In such a case, the samples should be contained in a vessel having a clear and transparent bottom for observation from a position under the vessel, but this is practically impossible in the prior art cable television microscopes.

Moreover, in the prior art, no such device has been developed as the one that has a telescopic camera unit and a display unit incorporated mechanically separate from each other to locate the units separately in varied positions as desired. It is just as in an astronomical telescope where an objective optics and an ocular optics are integral with each other, so that an observer himself or herself must stay in the darkness even in cold or chilling atmosphere to speculate celestial bodies under the conditions of desired surrounding brightness and dust in the air.

In accordance with the present invention, a television microscope is comprised of a base, a supporting arm pivotally fixed about a rotation axis approximately orthogonal to the base, a sample-mounting plate, microscopic object optics, and illuminating optics plate attached respectively to the supporting arm, and a wireless television camera unit located in an imaging position in the microscopic object optics.

In another aspect of the present invention, a television microscope is comprised of a base, a supporting arm pivotally fixed about a rotation axis approximately orthogonal to the base, a sample-mounting plate attached to the base, microscopic object optics and illuminating optics attached respectively to the supporting arm, and a wireless television camera unit located in an imaging position in the microscopic object optics.

In further another aspect of the present invention, a television microscope is comprised of a base, a supporting arm pivotally fixed about a rotation axis orthogonal to the base, a sample-mounting plate, microscopic object optics, and illuminating optics attached respectively to the supporting arm, a wireless television camera unit located in an imaging position in the microscopic object optics, and a display device.

In still another aspect of the present invention, a television microscope system is comprised of a base, a supporting arm pivotally fixed about a rotation axis orthogonal to the base, a sample-mounting plate attached to the base, microscopic object optics and illuminating optics attached respectively to the supporting arm, a wireless television camera unit located in an imaging position in the microscopic object optics, and a display device.

In another aspect of the present invention, a television camera apparatus is comprised of an object lens barrel holding an object lens, a camera housing detachably fixed to the object lens barrel, a light receiving element located in an imaging position in relation with the object lens within the camera housing, a television radio generator converting and transmitting wireless image signals produced by the light receiving element, and a display device receiving the image signals from the television radio generator and representing images.

Embodiments according to the present invention include improved features as follows:

The base can be altered in relative position to the rotation axis so as to be horizontal and non-horizontal.

When the supporting arm rotates about the rotation axis, the sample-mounting plate does not rotate while the microscopic object optics and the illuminating optics rotate along with the supporting arm.

The television microscope has ocular optics substituted for the wireless television camera unit.

The wireless television camera unit has a CMOS image sensor.

The wireless television camera unit has a CCD image sensor.

Embodiments of the present invention provide a television microscope that has a microscope unit and an observing unit or a monitor unit are not connected with each other by cable, so that there is no restriction imposed upon relative positions between the microscope unit and the monitor unit so as to facilitate indoor observation of snow in its natural environment and observation of any other object in their respective natural environments in any convenient site.

Also they provide a television microscope which allows an observer to see samples from desired positions without using a pivotal sample-mounting plate when the samples assume orientations varied from one side to another as in a minute identification mark labeled for discriminating authenticated paper currencies and securities from counterfeit ones because of its inconspicuous and incomprehensible geometrical profile when seen from only a single fixed position.

Further they provide a television microscope which allows an observer to see samples such as aquatic animals from a position under the samples as they would be in natural aquatic environments.

Still further they provide a television camera apparatus as used in an astronomical telescope which has a television camera unit substituted for an ocular optics to produce photoelectrically converted image signals in conditions of desired surrounding brightness and dust in the air, so as to allow an observer in a laboratory or a lecture room to see images on a display device therein.

Particular embodiments in accordance with this invention will now be described with reference to the accompanying drawings; in which:-
Fig. 1 is a perspective view showing an embodiment of a television microscope according to the present invention;
Fig. 2 is a perspective view illustrating microscopic object optics in the embodiment of the television microscope according to the present invention;
Fig. 3 is a perspective view illustrating a wireless television camera unit of the embodiment of the television microscope according to the present invention;
Fig. 4 is a front view showing the embodiment of the television microscope according to the present invention, with the television microscope assuming a posture for horizontal observation;
Fig. 5 is a front view showing the embodiment of the television microscope according to the present invention, with the television microscope assuming a posture for vertical observation from the bottom of a sample;

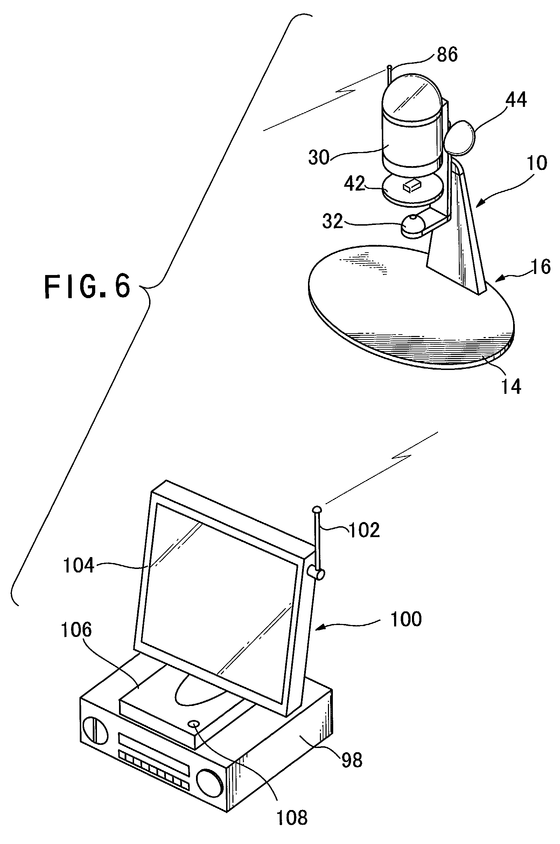

Fig. 6 is a diagram illustrating an exemplary arrangement of a television microscopic system according to the present invention; and
Fig. 7 is a diagram illustrating an exemplary arrangement of an astronomical telescope television camera system according to the present invention.

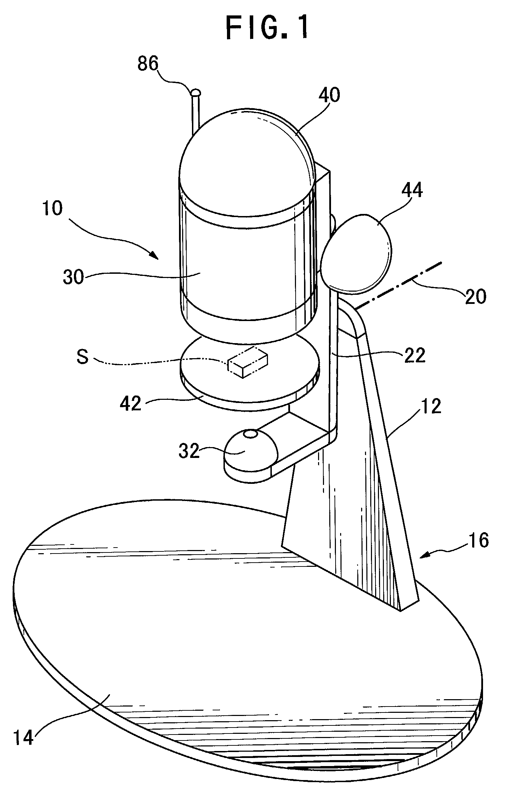

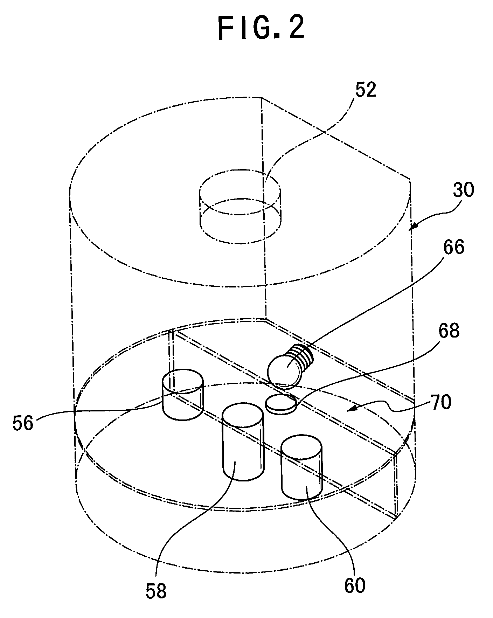

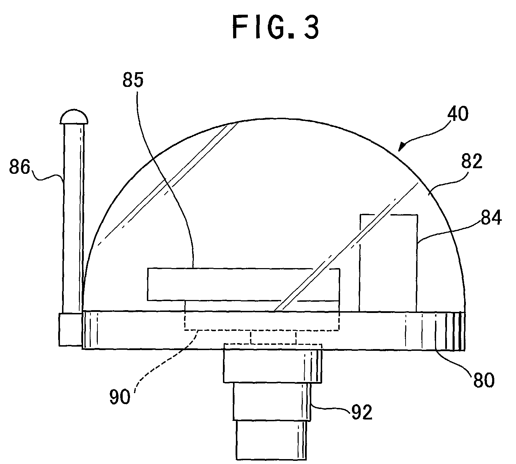

Preferred embodiments of a television microscope according to the present invention will now be described in detail in conjunction with the accompanying drawings. Fig. 1 is a perspective view showing an embodiment of the television microscope. Fig. 2 is a front view illustrating a microscopic unit in the embodiment of the television microscope. Fig. 3 is a front view depicting a television camera unit in the embodiment of the television microscope.

A television microscope 10 is, as shown in Fig. 1, comprised of a base 16 consisting of a pillar 12 and a flat plate 14, a supporting arm 22 pivotally fixed about a rotation axis 20 orthogonal to the base 16, microscopic object optics 30 and light transmitting illuminating optics 32 attached respectively to the supporting arm 22, and a wireless television camera unit 40 located in an imaging position in the microscopic object optics 30.

A sample-mounting plate 42 in which sample S is to reside is fixed along an extension of the rotation axis 20 right ahead of the center of the supporting arm 22. Thus, when the supporting arm 22 rotates, the microscopic object optics 30, the light transmitting illuminating optics 32, and the wireless television camera unit 40 turn upside down together while the sample-mounting plate 42 remains stationary. The supporting arm 22 has its opposite sides coupled to focusing handles 44 and 46.

As shown in Fig. 2, the microscopic object optics 30 has a roughly cylindrical housing 50 provided in its upper surface with an image transmitting port 52 to which a wireless television camera unit 40 and an ocular (not shown) are to be attached. Within the housing 50, a plurality of object lenses 56, 58 and 60, which are slidably replaced with each other, are disposed. In an area close to the pillar 12, opposed to the object lenses 56, 58, 60 within the housing, an epi-illuminating optics 70 consisting of a light source (lamp) 66 and a converging lens 68 is positioned.

As can be seen in Fig. 3, the wireless television camera unit 40 is shaped into an approximately semispherical contour and has a flat bottom 80 and a spherical upper half 82 made of transparent resin, and a telescopic transmitter antenna 86 extends from an outer circumpherential edge of the bottom 80. Within the wireless television camera unit 40, an electric cell 84, a television radio generator 86, and a light receiving device 90 which may be a CMOS image sensor or a CCD image sensor are disposed. A camera unit mount 92, which is engaged with the image transmitting port 52 of the microscopic object optics 30, is fixed to a lower surface of the bottom 80 at its center.

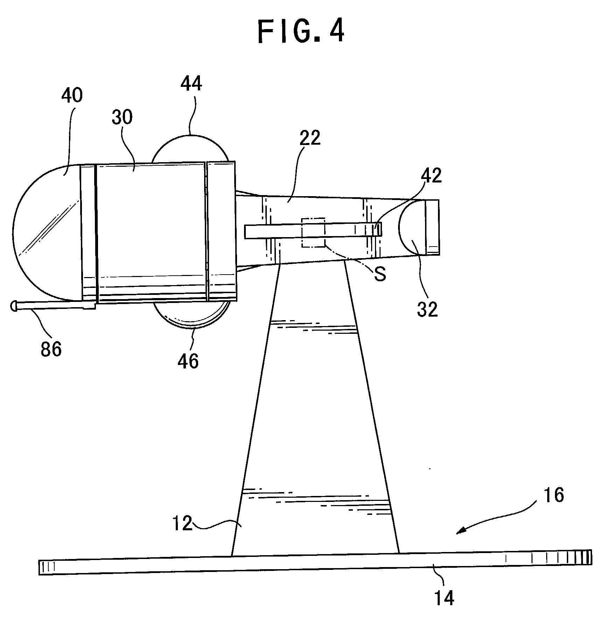

The supporting arm 22 to which the microscopic object optics 30, the illuminating optics 32, and the wireless radio camera unit 40 are affixed can be rotated about a shaft (not shown) corresponding to the rotation axis 20, and as shown in Fig. 4, the illuminating optics 32 illuminates the sample horizontally for subsequent observation. For the observation under adequate conditions, the sample S and the sample-mounting plate 42 are configured so that light flux can be transmitted horizontally through them. This way of observation is advantageously applied to a sample such as aquatic animals so as to facilitate the observation of lateral phases of the animals in their easiest postures.

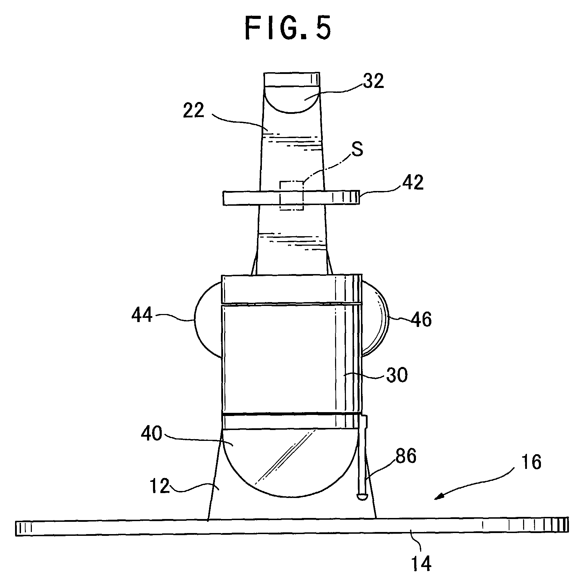

The supporting arm 22 to which the microscopic object optics 30, the illuminating optics 32, and the wireless television camera unit 40 are affixed is further rotated about the shaft (not shown) corresponding to the rotation axis 20, and as shown in Fig. 5, the illuminating optics 32 illuminates the sample from a vertical position under the sample for subsequent observation. For the observation in adequate conditions, the sample S and the sample-mounting plate 42 are configured so that light flux can be transmitted vertically through them. This way of observation from the position vertically under a sample is advantageously applied to the sample such as aquatic animals so as to facilitate the observation of bottom phases of the animals in their easiest postures, including presence and appearances of their legs and tails.

The television microscope 10 is combined with a display device 100 such as a liquid crystal display, a portable TV set, a TV set with VCR 98 and the like. The display device 100 is provided with a receiver antenna 102 receiving image signals from the transmitter antenna 86 of the television microscope 10, a liquid crystal display unit 104, a base 106, and a power switch 108, and it displays transmitted images and records them into video tape and cassette.

The television microscope 10 is located in an environment convenient for the sample S and suitable for observation of the sample S including desktop, outdoor, temperature control room, magnetic field control room, radiation room, and the like, while the display device 100 is located in a lecture room or a test and administration room, close to or remote from the television microscope 1.

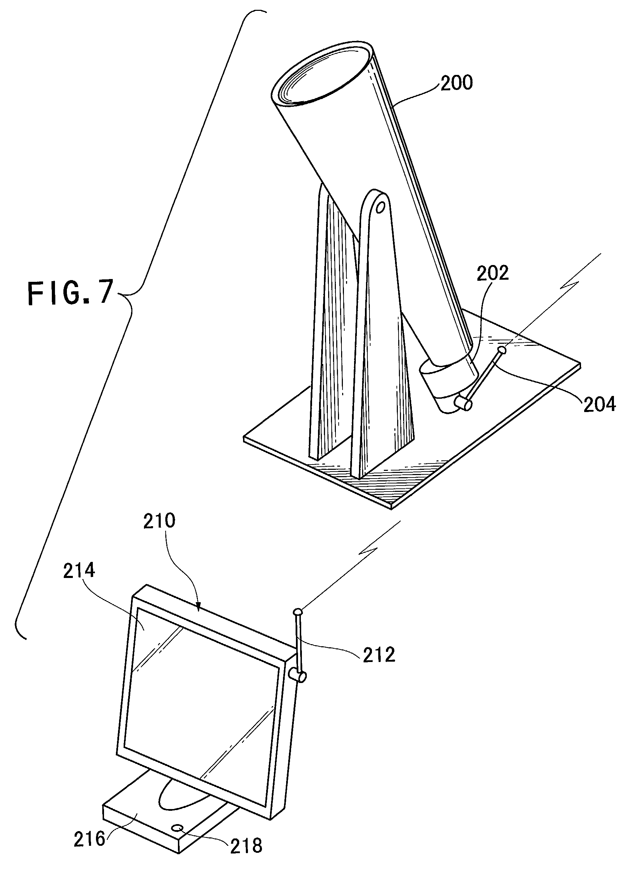

Another preferred embodiment of the present invention is an astronomical telescope television system, and as shown in Fig. 7, the system is comprised of telescopic object optics 200, a television camera unit 202, and a display device 210. An ocular optics of the telescope is removed and is replaced with the television camera unit 202 having a photoelectric device (not shown) sensitive to relatively low level of illuminance, which instead is attached to the telescopic object optics 200. The display device 210 is provided with a receiver antenna 212 receiving image signals from a transmitter antenna 204 of the television camera unit 202, a liquid crystal display unit 214, a base 216, and a power switch 218.

Although the prior art telescope forces an observer to speculate images inverted in both lateral and vertical directions, the embodiment according to the present invention facilitates to invert images upside down and left to right to get erect images, and this provides significantly advantageous effects of letting the observer know and specify four right phases of celestial bodies in lateral and vertical directions even when the observer is not facing the real celestial bodies.

In this embodiment, any person skilled in the art will easily evaluate that the telescopic object optics can be replaced with appropriate objective optics for terrestrial telescopes and monocles.

In the television camera apparatus according to the present invention, especially in the television microscope and the television microscopic system, there is no cable-connection between microscopic unit and the observing unit or the monitor unit which may restricts relative position of the microscopic unit to the monitor unit, and this advantageously permits indoor observation of samples such as snow as they would be in their respective natural environments.

Also, a simplified configuration of the television camera apparatus according to the present invention without a rotating sample-mount plate advantageously allows the observer to monitor samples from desired positions when the samples assume orientations varied from one side to another as in a minute identification mark labeled for discriminating authenticated paper currencies and securities from counterfeit ones because of its inconspicuous and incomprehensible geometrical profile when seen from only a single fixed position.

The television microscope and the television microscopic system according to the present invention further advantageously allow the observer to monitor samples such as aquatic animals from varied positions, especially from a position under the samples, when it is preferable that the samples are monitored as they would be in their respective natural aquatic environments.

In the television camera apparatus according to the present invention, especially in the context of the astronomical telescope, the ocular is removed and replaced with the television camera unit, so as to produce photoelectrically converted image signals in conditions of desired surrounding brightness and dust in the air, and thus, the observer in a laboratory or a lecture room can monitor images on the display device therein.

## Claims

1. A television microscope, comprising a base (12), a supporting arm (22) pivotally fixed about a rotation axis orthogonal to the base, microscopic object optics (30), and illuminating optics (32) attached respectively to the supporting arm, a sample-mounting plate (42), and a wireless television camera unit (40) located in an imaging position in the microscopic object optics (30).

2. A television microscope according to claim 1, wherein when the supporting arm (22) rotates about the rotation axis, the sample-mounting plate (42) does not rotate while the microscopic object optics (30) and the illuminating optics (32) rotate along with the supporting arm (22).

3. A television microscope according to claim 1 or 2, wherein the sample mounting plate (42) is attached to an extension of a pin defining the rotation axis of the supporting arm (22).

4. A television microscope, according to claim 1, wherein the sample-mounting plate (42) is attached to the base (12).

5. A television microscope according to any one of the preceding claims, wherein the base can be altered in relative position to the rotation axis so as to be horizontal (12) and non-horizontal.

6. A television microscope according to any one of the preceding claims, wherein the wireless television camera unit (40) has a CMOS image sensor.

7. A television microscope according to any one of claims 1 to 5, wherein the wireless television camera unit (40) has a CCD image sensor.

8. A television microscope according to any one of the preceding claims, which also includes a display device (100).

9. A television microscope according to any one of the preceding claims, wherein the television microscope has ocular optics substituted for the wireless television camera unit (40).

10. A television camera apparatus, comprising an object lens barrel holding an object lens (56,58,60), a camera housing (80,92) detachably fixed to the object lens barrel, a light receiving element (90) located in an imaging position in relation with the object lens within the camera housing, a television radio generator (86) converting and transmitting wireless image signals produced by the light receiving element, and a display device (100,214) receiving the image signals from the television radio generator and representing images based upon the image signals.
